# EUROPÄISCHE PATENTANMELDUNG

(11) **EP 4 495 505 A1**
(43) Veröffentlichungstag der Anmeldung: **22.01.2025**
(21) Anmeldenummer: 24188138.2
(22) Anmeldetag: 11.07.2024
(51) Int. Cl.: F25B 13/00, F25B 40/00, F25B 41/20, F16K 11/00, F25B 41/26, F25B 41/30

(54) **KÄLTEKREISLAUFVORRICHTUNG**

(30) Priorität: 21.07.2023 DE 102023119273
(71) Anmelder: Viessmann Climate Solutions SE, 35108 Allendorf (DE)
(72) Erfinder: Dr. Tannert, Christian, 01445 Radebeul (DE); Oelschlägel, Tommy, 01097 Dresden, (DE); Dr. Maul, Joachim, 35630 Ehringshausen (DE); Tiwari, Sumegh, 01159 Dresden, (DE)
(74) Vertreter: Wolf & Wolf Patentanwaltsgesellschaft mbH

(57) **Zusammenfassung**

Die Erfindung betrifft eine Kältekreislaufvorrichtung, umfassend einen durch Urformen hergestellten monolithischen Körper (1), eine im Körper (1) ausgebildete Kältekreislaufkomponente (2) und ein ebenfalls im Körper (1) ausgebildetes und mit der Kältekreislaufkomponente (2) fluidisch verbundenes Wegeventil (3). Nach der Erfindung ist vorgesehen, dass im Körper (1) neben dem Wegeventil (3) ein ebenfalls mit der Kältekreislaufkomponente (2) fluidisch verbundenes Zusatzwegeventil (4) ausgebildet ist.

## Beschreibung

Die Erfindung betrifft eine Kältekreislaufvorrichtung gemäß dem Oberbegriff des Patentanspruchs 1.

Eine Kältekreislaufvorrichtung der eingangs genannten Art ist aus dem Patentdokument EP 3 929 501 A1 bekannt. Diese besteht aus (siehe dort insbesondere Anspruch 3 und Figur 7) einem durch Urformen hergestellten monolithischen Körper, einer im Körper ausgebildeten Kältekreislaufkomponente und einem ebenfalls im Körper ausgebildeten und mit der Kältekreislaufkomponente fluidisch verbundenen Wegeventil.

Der Erfindung liegt die Aufgabe zugrunde, eine Kältekreislaufvorrichtung der eingangs genannten Art zu verbessern. Insbesondere soll eine zum Heizen und Kühlen geeignete Kältekreislaufvorrichtung geschaffen werden, die in beiden Betriebsweisen gleichermaßen effizient arbeitet und dabei auch noch besonders kompakt ausgebildet ist.

Diese Aufgabe ist mit einer Kältekreislaufvorrichtung der eingangs genannten Art durch die im Kennzeichen des Patentanspruchs 1 aufgeführten Merkmale gelöst.

Nach der Erfindung ist also vorgesehen, im Körper neben dem Wegeventil ein ebenfalls mit der Kältekreislaufkomponente fluidisch verbundenes Zusatzwegeventil ausgebildet ist.

Mit anderen Worten zeichnet sich die erfindungsgemäße Kältekreislaufvorrichtung somit dadurch aus, dass im Körper ein Zusatzwegeventil vorgesehen ist, mit dem auf einfache Weise massiver Einfluss auf das Strömungsgeschehen im Kältekreislauf genommen werden kann, und zwar insbesondere unter dem Aspekt eines Wechsels der Betriebsweise von Heizen zu Kühlen (oder umgekehrt) bei gleichzeitiger Gewährleistung optimaler Strömungs- und Wärmeübertragungsbedingungen im Kältekreislauf. Noch etwas genauer betrachtet, werden auf diese Weise die Strömungswiderstände in der Kältekreislaufvorrichtung optimiert. Außerdem ist auf diese Weise sichergestellt, dass die Wärmeübertragung an den jeweils gewünschten und nicht an unerwünschten Stellen stattfindet. Ferner können möglicherweise vorgesehene Sammler und/oder Akkumulatoren (Phasentrenner) problemlos betrieben werden, da sie in beiden Betriebsweisen, was unten noch genauer erläutert wird, vom Kältekreislaufmedium in der gleichen Richtung durchströmt werden, und ihre Position im Kältemittelkreislauf funktionell identisch bleiben kann.

Die vorgenannte Kältekreislaufkomponente ist dabei mindestens als einfache Fluidleitung für das Kältekreislaufmedium, vorzugsweise aber als wahlweise auf den Druck oder die Temperatur des Kältekreislaufmediums wirkendes Funktionsbauteil des Kältemittelkreislaufs ausgebildet, ganz besonders bevorzugt als Expansionseinrichtung. Dabei können im monolithischen Körper selbstverständlich auch mehrere, insbesondere auch verschiedene Kältekreislaufkomponenten angeordnet sein.

Besonders bevorzugt ist dabei weiterhin, was weiter unten noch genauer erläutert wird, vorgesehen, dass wahlweise das Wegeventil und/oder das Zusatzwegeventil als 4/2-Wegeventil ausgebildet ist. Bezüglich des verwendeten Begriffs "Wegeventil" wird dabei der Einfachheit halber auf den Artikel "Wegeventil" in Wikipedia verweisen (siehe https://de.wikipedia.org/wZin-dex.php?title= Wegeventil&oldid=228562118), aus dem sich auch ergibt, dass das besagte 4/2-Wegeventil vier Anschlüsse und zwei Schaltstellungen aufweist.

Andere vorteilhafte Weiterbildungen der erfindungsgemäßen Kältekreislaufvorrichtung ergeben sich aus den abhängigen Patentansprüchen.

Der Vollständigkeit halber wird noch auf das nachveröffentlichte Dokument DE 10 2022 116 807 A1 hingewiesen. Bei dieser Lösung ist aber das Wegeventil außerhalb des Körpers angeordnet.

Die erfindungsgemäße Kältekreislaufvorrichtung einschließlich ihrer vorteilhaften Weiterbildungen gemäß der abhängigen Patentansprüche wird nachfolgend anhand der zeichnerischen Darstellung verschiedener Ausführungsbeispiele näher erläutert.

Es zeigt
- Figur 1: perspektivisch und durchsichtig dargestellt ein erstes Ausführungsbeispiel der erfindungsgemäßen Kältekreislaufvorrichtung mit dem Wegeventil und einem Zusatzwegeventil;
- Figur 2: als Schaltplan ein zweites Ausführungsbeispiel der erfindungsgemäßen Kältekreislaufvorrichtung mit einem gemeinsamen Antrieb zur Betätigung des Wegeventils und des Zusatzwegeventils;
- Figur 3: als Ausschnitt aus Figur 2 die Schaltstellung der beiden Wegeventile bei in Bezug auf Figur 2 umge- kehrter Betriebsweise der Kältekreislaufvorrichtung; und
- Figur 4: als Schaltplan ein drittes Ausführungsbeispiel der erfindungsgemäßen Kältekreislaufvorrichtung, bei dem die Kältekreislaufkomponente als Fluidleitung ausgebildet ist.

Die in den Figuren dargestellte Kältekreislaufvorrichtung besteht aus einem durch Urformen hergestellten monolithischen Körper 1, einer im Körper 1 ausgebildeten Kältekreislaufkomponente 2 und einem ebenfalls im Körper 1 ausgebildeten und mit der Kältekreislaufkomponente 2 fluidisch verbundenen Wegeventil 3.

Die vorstehend verwendete Maßgabe "im Körper ausgebildet" bedeutet dabei insbesondere, dass die Kältekreislaufkomponente 2 bzw. das Wegeventil 3 mindestens teilweise aus dem Körper 1 selbst gebildet ist, mithin wahlweise direkt bei dessen Herstellung oder in einem Nachbearbeitungsschritt erzeugt worden ist.

Die vorstehend verwendete Maßgabe "Urformen" umfasst dabei alle Fertigungsverfahren, bei denen aus einem formlosen Stoff ein fester Körper hergestellt wird, insbesondere auch die additiven Herstellungsverfahren wie den 3D-Druck.

Dabei ist weiterhin bevorzugt vorgesehen, dass der Körper 1 wahlweise aus Metall (insbesondere Kupfer, Stahl oder Aluminium) oder Kunststoff gebildet ist. Ferner ist bevorzugt vorgesehen, dass der Körper 1 eine Vielzahl von geschlossenen, von außen unzugänglichen Hohlräumen, vorzugsweise wie eine Wabenstruktur, aufweist.

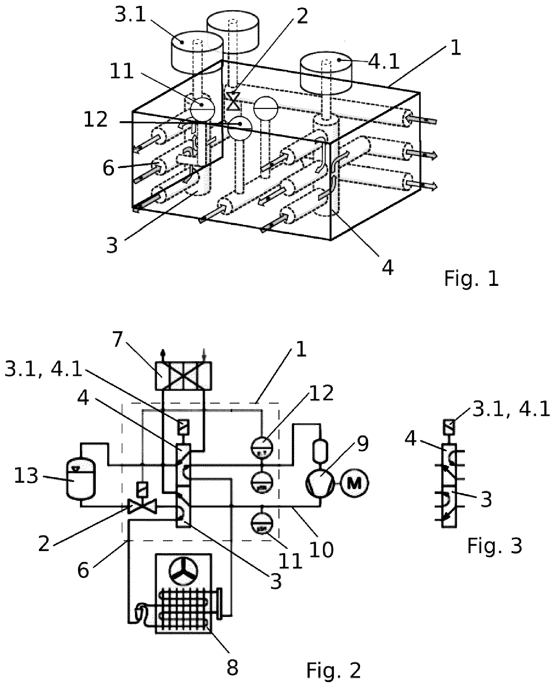

Wesentlich für die erfindungsgemäße Lösung ist nun, dass im Körper 1 neben dem Wegeventil 3 ein ebenfalls mit der Kältekreislaufkomponente 2 fluidisch verbundenes Zusatzwegeventil 4 ausgebildet ist. Durch die beiden Ventile ist es dabei möglich, dass neben anderen Kältekreislaufkomponenten insbesondere die beiden Wärmeübertrager 7,8, auf die weiter unten noch genauer eingegangen wird (siehe auch Figur 2), stets in der gleichen Richtung durchströmt werden können, und zwar, egal bei welcher Betriebsweise (also Heizen oder Kühlen) die Kältekreislaufvorrichtung betrieben wird. Dies wiederum ist dabei deshalb besonders günstig, weil die Kältekreislaufkomponenten regelmäßig eine bevorzugte und damit besonders effiziente Durchströmungsrichtung aufweisen.

Besonders bevorzugt ist bei alledem, wie eingangs bereits ausgeführt, vorgesehen, dass wahlweise das Wegeventil 3 und/oder das Zusatzwegeventil 4 als 4/2-Wegeventil ausgebildet ist, da sich mit einem solchen Ventil besonders gut ein Kältekreislauf aufbauen lässt.

Weiterhin ist, wie auch in den Figuren dargestellt, bevorzugt vorgesehen, dass wahlweise das Wegeventil 3 und/oder das Zusatzwegeventil 4 als durch Drehung einstellbares Ventil ausgebildet ist.

Dabei ist weiterhin bevorzugt wahlweise am Wegeventil 3 ein erster wahlweise elektromotorischer oder -magnetischer Antrieb 3.1 und/oder am Zusatzwegeventil 4 ein zweiter wahlweise elektromotorischer oder -magnetischer Antrieb 4.1 vorgesehen.

Ganz besonders bevorzugt ist dabei mit Verweis auf Figur 2 und 3 vorgesehen, dass der erste und zweite wahlweise elektromotorische oder -magnetische Antrieb 3.1, 4.1 als gemeinsamer Antrieb für das Wegeventil 2 und das Zusatzwegeventil 4 ausgebildet sind, d. h. die Ventile sind gemeinsam und gleichzeitig mit einem (einzigen) Antrieb betätigbar. Noch etwas genauer betrachtet, ist dabei besonders bevorzugt vorgesehen, dass der gemeinsame Antrieb eine Welle antreibt, die beide Ventile ansteuert bzw. betätigt; mithin also eine harte Kopplung mit nur einem einzigen Antrieb, ohne Möglichkeit einer Einzelansteuerung der beiden Ventile 2, 4.

Alternativ sind, wie in Figur 1 dargestellt, zwei separate Antriebe 3.1, 4.1 vorgesehen, wobei diese wahlweise mit einem einzigen von einer Regelungseinrichtung kommenden Steuersignal gemeinsam oder mit zwei identischen zeitgleich von der Regelungseinrichtung kommenden Steuersignalen separat betätigt werden.

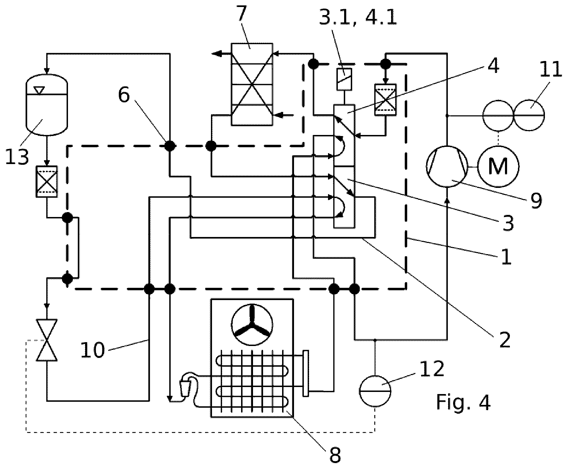

Wie weiterhin insbesondere aus Figur 4 ersichtlich, ist die Kältekreislaufkomponente 2 ferner bevorzugt als Fluidkanal ausgebildet, der vorzugsweise einerseits wahlweise mit dem Wegeventil 3 oder mit dem Zusatzwegeventil 4 und andererseits jeweils mit einer am Körper 1 vorgesehenen Anschlussschnittstelle 6 verbunden ausgebildet ist. Falls für die Auslegung des Kältekreislaufs zweckdienlich, ist außerdem bevorzugt vorgesehen, aber nicht extra dargestellt, dass mindestens ein Fluidkanal eine Abzweigung aufweist.

Ferner ist noch besonders bevorzugt vorgesehen, dass wahlweise ein erster Wärmeübertrager 7, ein zweiter Wärmeübertrager 8 (siehe jeweils auch oben) und/oder ein Verdichter 9 über Verbindungsleitungen 10 mit jeweils einer Anschlussschnittstelle 6 am Körper 1 verbunden ausgebildet ist bzw. sind.

Weiterhin ist noch bevorzugt vorgesehen, dass die (eingangs genannte) Kältekreislaufkomponente 2 als vorzugsweise regelbare Expansionseinrichtung ausgebildet ist.

Wie in den Figuren dargestellt, ist ferner noch im Körper 1 zur Zustandserfassung eines in der Kältekreislaufvorrichtung zirkulierenden Kältekreislaufmediums (mindestens) ein Sensor 12 vorgesehen, und zwar insbesondere ein Temperatursensor oder ein Drucksensor.

Außerdem ist im Körper 1 noch bevorzugt ein mit einem in der Kältekreislaufvorrichtung zirkulierenden Kältekreislaufmedium in Kontakt stehender Druckschalter 11 vorgesehen. Dieser wird insbesondere zum Schalten des Verdichters eingesetzt, damit ein Druck im Kältekreis einen oberen vorgegebenen Wert nicht über- bzw. einen unteren vorgegebenen Wert nicht unterschreitet.

Anhand der Figuren 2 (Heizbetrieb) und 3 (Kühlbetrieb) wird nun schließlich noch die Funktionsweise der erfindungsgemäßen Kältekreislaufvorrichtung beschrieben.

In Figur 2 strömt das Kältekreislaufmedium vom Verdichter 9 über die Verbindungsleitung 10, über eine Anschlussschnittstelle 6 (zum Beispiel eine entsprechende Gewindebohrung oder dergleichen), über einen im Körper 1 vorgesehenen Fluidkanal und vorbei an einem Druckschalter 11 zum Wegeventil 3. Von dort strömt das Kältekreislaufmedium aufgrund der gewählten Schaltstellung des Wegeventils 3 zum ersten Wärmeübertrager, der in diesem Fall als Kondensator arbeitet und vorzugsweise als Plattenwärmeübertrager ausgebildet ist. Nach dem Kondensator strömt das Kältekreislaufmedium zum Zusatzwegeventil 4 und von dort aufgrund der gewählten Schaltstellung zunächst zu einem außerhalb des Körpers 1angeordneten Sammelbehälter und von dort in den Körper 1 zurück zu einer einstellbaren Expansionseinrichtung (Kältekreislaufkomponente 2). Von dort geht es weiter wieder zum Wegeventil 3, von dort zum zweiten Wärmeübertrager 8, der in diesem Fall als Verdampfer arbeitet und vorzugsweise als Lamellenwärmeübertrager mit großem Ventilator ausgebildet ist. Von dort strömt das Kältekreislaufmedium wiederum über eine Verbindungsleitung 10, eine Anschlussschnittstelle 6 und eine Fluidleitung zum Zusatzwegeventil 4 und von dort letztlich zurück zum Verdichter 9.

In Figur 3 sind der Einfachheit halber lediglich das Wegeventil 3 und das Zusatzwegeventil 4, allerdings jeweils in seiner anderen Schaltstellung, bei der beispielsweise das vom Verdichter 9 kommende Kältekreislaufmedium über die Anschlussschnittstelle 6 dem zweiten Wärmeübertrager 8, der in dieser Betriebsweise dann als Kondensator arbeitet, zugeführt wird. Dabei werden, wie dargestellt, das Wegeventil 3 und das Zusatzwegeventil 4 über einen gemeinsamen wahlweise elektromotorischen oder magnetischen Antrieb (mit 3.1, 4.1 gekennzeichnet) betätigt, wobei es gleichzeitig dank Einsatz zweier Wegeventile wie ersichtlich möglich ist, dass das Kältekreislaufmedium bei beiden Betriebsweisen alle Kältekreislaufkomponenten immer in der gleichen Richtung durchströmt.

### Bezugszeichenliste

- 1: Körper
- 2: Kältekreislaufkomponente
- 3: Wegeventil
- 3.1: elektromotorischer oder elektromagnetischer Antrieb
- 4: Zusatzwegeventil
- 4.1: elektromotorischer Antrieb
- 6: Anschlussschnittstelle
- 7: erster Wärmeübertrager
- 8: zweiter Wärmeübertrager
- 9: Verdichter
- 10: Verbindungsleitung
- 11: Druckschalter
- 12: Sensor
- 13: Phasentrenner

## Patentansprüche

1. Kältekreislaufvorrichtung, umfassend einen durch Urformen hergestellten monolithischen Körper (1), eine im Körper (1) ausgebildete Kältekreislaufkomponente (2) und ein ebenfalls im Körper (1) ausgebildetes und mit der Kältekreislaufkomponente (2) fluidisch verbundenes Wegeventil (3),
**dadurch gekennzeichnet,**
**dass** im Körper (1) neben dem Wegeventil (3) ein ebenfalls mit der Kältekreislaufkomponente (2) fluidisch verbundenes Zusatzwegeventil (4) ausgebildet ist.

2. Kältekreislaufvorrichtung nach Anspruch 1,
**dadurch gekennzeichnet,**
**dass** wahlweise das Wegeventil (3) und/oder das Zusatzwegeventil (4) als 4/2-Wegeventil ausgebildet ist.

3. Kältekreislaufvorrichtung nach Anspruch 1 oder 2,
**dadurch gekennzeichnet,**
**dass** wahlweise das Wegeventil (3) und/oder das Zusatzwegeventil (4) als durch Drehung einstellbares Ventil ausgebildet ist.

4. Kältekreislaufvorrichtung nach einem der Ansprüche 1 bis 3, **dadurch gekennzeichnet,**
**dass** am Wegeventil (3) ein erster wahlweise elektromotorischer oder -magnetischer Antrieb (3.1) vorgesehen ist.

5. Kältekreislaufvorrichtung nach einem der Ansprüche 1 bis 4, **dadurch gekennzeichnet,**
**dass** am Zusatzwegeventil (4) ein zweiter wahlweise elektromotorischer oder -magnetischer Antrieb (4.1) vorgesehen ist.

6. Kältekreislaufvorrichtung nach Anspruch 4 oder 5,
**dadurch gekennzeichnet,**
**dass** der erste und zweite wahlweise elektromotorische oder -magnetische Antrieb (3.1, 4.1) als gemeinsamer Antrieb für das Wegeventil (3) und das Zusatzwegeventil (4) ausgebildet sind.

7. Kältekreislaufvorrichtung nach einem der Ansprüche 1 bis 6, **dadurch gekennzeichnet,**
**dass** die Kältekreislaufkomponente (2) als Fluidkanal ausgebildet ist, der vorzugsweise einerseits wahlweise mit dem Wegeventil (3) oder mit dem Zusatzwegeventil (4) und andererseits jeweils mit einer am Körper (1) vorgesehenen Anschlussschnittstelle (6) verbunden ausgebildet ist.

8. Kältekreislaufvorrichtung nach Anspruch 7,
**dadurch gekennzeichnet,**
**dass** wahlweise ein erster Wärmeübertrager (7), ein zweiter Wärmeübertrager (8), ein Phasentrenner (13) und/oder ein Verdichter (9) über Verbindungsleitungen (10) mit jeweils einer Anschlussschnittstelle (6) am Körper (1) verbunden ausgebildet ist bzw. sind.

9. Kältekreislaufvorrichtung nach einem der Ansprüche 1 bis 8, **dadurch gekennzeichnet,**
**dass** die Kältekreislaufkomponente (2) als Expansionseinrichtung ausgebildet ist.

10. Kältekreislaufvorrichtung nach einem der Ansprüche 1 bis 9, **dadurch gekennzeichnet,**
**dass** im Körper (1) ein mit einem in der Kältekreislaufvorrichtung zirkulierenden Kältekreislaufmedium in Kontakt stehender Druckschalter (11) vorgesehen ist.
